Europäisches Patentamt

European Patent Office

Office européen des brevets

(19)

(11) **EP 1 163 776 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(21) Anmeldenummer: **00916771.9**

(22) Anmeldetag: **02.03.2000**

(51) Int Cl.$^7$: **H04L 29/06**

(86) Internationale Anmeldenummer:
**PCT/DE2000/000586**

(87) Internationale Veröffentlichungsnummer:
**WO 2000/056005 (21.09.2000 Gazette 2000/38)**

(54) **ANONYMISIERUNGSVERFAHREN**

ANONYMIZATION METHOD

PROCEDE POUR RENDRE ANONYMES DES DONNEES SENSIBLES

(84) Benannte Vertragsstaaten:
**AT BE CH CY DE DK ES FI FR GB GR IE IT LI LU MC NL PT SE**

(30) Priorität: **12.03.1999 DE 19911176**

(43) Veröffentlichungstag der Anmeldung:
**19.12.2001 Patentblatt 2001/51**

(73) Patentinhaber: **Lok Lombardkasse AG**
**60323 Frankfurt am Main (DE)**

(72) Erfinder: **NEHL, Roland**
**D-35789 Weilmünster (DE)**

(74) Vertreter: **Rohnke, Christian, Dr.**
**Jungfernstieg 51**
**20354 Hamburg (DE)**

(56) Entgegenhaltungen:
**WO-A-95/26595**        **WO-A-97/28652**
**US-A- 5 668 810**      **US-A- 5 768 391**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Anonymisierung sensibler Daten innerhalb eines Datenstroms.

In Datenbanken werden Informationen zur langfristigen Aufbewahrung gespeichert. Der Wert solcher Informationssammlungen wird als wesentliches Gut von Organisationen angesehen. Aufgrund der Sensitivität wird im allgemeinen der Zugriff auf Datenbanken beschränkt, d.h. daß der Zugriff nur für autorisierte Anwender gemäß deren Rechteprofil möglich ist. In einem Rechteprofil kann festgelegt werden, wer auf welche Daten mit welchen Modi (z.B. lesend, schreibend) zugreifen kann. Ein gängiges Beispiel ist, daß nicht jeder Mitarbeiter eines Untemehmens Personaldaten einsehen kann. Auch gemäß dem "Need to know"-Prinzip können Mitarbeiter ausschließlich die Informationen einsehen, die sie zur Ausübung ihrer dienstlichen Tätigkeiten benötigen. Alle weiteren Informationen sind gesperrt. Für die Vergabe der Zugriffsrechte ist ein Administrator zuständig, von dessen Zuverlässigkeit der Datenschutz im wesentlichen abhängt.

Zur Datensicherung werden häufig Anonymisierungsverfahren eingesetzt, die diejenigen Daten, auf die kein Zugriff erfolgen soll, anonymisieren. Solche Verfahren werden insbesondere verwendet, wenn Daten einer Datenbank in Form eines Datenstroms übermittelt werden sollen, wobei sichergestellt werden muß, daß auf dem Übermittlungsweg kein unberechtigter Zugriff auf die Daten erfolgt. Ein Anwendungsbeispiel hierfür ist die Versendung eines Datenstroms per E-Mail. Dabei haben Sender und Empfänger volle Zugriffsrechte auf alle in der Datenbank enthaltenen Daten. Die Daten werden vor Absendung verschlüsselt, so daß Angreifer innerhalb des Internets keinen Zugriff auf die Daten nehmen können. Der Empfänger entschlüsselt die Daten und kann vollständigen Zugriff darauf nehmen.

Bei den bekannten Verfahren zum Schutz von Datenbanken wird die Autorisierung und Rechteprüfung typischerweise am Datenbank-Front End realisiert. Dies trifft z.B. für DB2™ von IBM zu. Wird ein höheres Niveau bzgl. des Zugriffsschutzes gefordert, so gibt es kommerzielle Produkte, wie z.B. RACF™ (Ressource Access Control Facility) von IBM. Die Zugriffskontrolle wird jedoch auch hier von einem Administrator kontrolliert.

Als allgemeiner Stand der Technik ist das Dokument US-A-5 768 391 angegeben. Eine klassische Situation, in der die herkömmlichen Verfahren unzureichend sind, ist eine Outsourcer/Insourcer-Beziehung. Ein Outsourcer läßt bestimmte Dienste durch einen Insourcer erbringen und übergibt dem Insourcer alle dafür notwendigen Daten, die beim Insourcer in einer Datenbank gespeichert werden. Wenn der Outsourcer aus Datenschutzgründen oder aus Gründen des Kundenschutzes die Weitergabe von kundenidentifizierenden Daten eigenständig kontrollieren will, wird mit den bekannten Anonymisierungsverfahren entweder der Zugriff auf die gesamte Datenbank unterbunden oder die selektive Kontrolle über den Zugriff auf bestimmte Daten einem Administrator unterstellt, der im dem Hause des Insourcers angesiedelt ist. Grundsätzlich wäre der Zugriff somit auch auf sensible Daten möglich.

Es ist Aufgabe der vorliegenden Erfindung, ein Verfahren zur Verfügung zu stellen, das den Zugriff auf eine Datenbank ermöglicht, dabei aber bestimmte Daten innerhalb dieser Datenbank vom Zugriff ausschließt, ohne die Zuordnung der ausgeschlossenen Daten zu den restlichen Daten zu zerstören. Die Datenbank soll zur Bearbeitung der nicht geschützten Daten in dritte Hände gegeben werden können, ohne daß die Zugriffskontrolle auf die geschützten Daten aus der Hand gegeben wird.

Erfindungsgemäß wird ein Verfahren zur Anonymisierung sensibler Daten innerhalb eines Datenstroms mit folgenden Schritten vorgeschlagen:

a) Komprimierung des sensiblen Datenfeldes

b) Anonymisierung des sensiblen Datenfelds;

c) Kennzeichnung des anonymisierten sensiblen Datenfelds innerhalb des Datenstroms durch Start- und Stoppzeichen.

Erfindungsgemäß werden die sensiblen Daten innerhalb einer Datenbank selektiv anonymisiert. Die anonymisierten Datenfelder werden mit einem Start- und einem Stoppzeichen versehen, um sie für die spätere Deanonymisierung kenntlich zu machen.

Das erfindungsgemäße Verfahren kann insbesondere eingesetzt werden, wenn ein Datenbanknutzer Daten in einer Datenbank ablegt, und Teile der Daten durch einen Datenbankbetreiber bearbeitet werden sollen. Während der Datenbanknutzer autorisiert ist, sämtliche Daten zu lesen, sollen sensible Daten, wie z. B. kundenidentifizierende Informationen, für den Datenbankbetreiber anonymisiert und nicht deanonymisierbar sein. Die Anonymisierungsinformation verbleibt beim Datenbanknutzer. Die nicht anonymisierten Daten können vom Datenbankbetreiber ausgewertet und bearbeitet werden. Die Zuordnung der Daten zueinander bleibt erhalten.

Die sensiblen Daten können beispielsweise kundenidentifizierende Informationen sein, wobei die dem Kunden zugeordneten Daten zwecks statistischer Auswertung lesbar sein sollen. Die Datenbank kann mit dem erfindungsgemäßen Anonymisierungsverfahren partiell anonymisiert und an Dritte zur statistischen Auswertung und Bearbeitung weitergegeben werden. Die kundenidentifizierenden Daten sind für den Dritten nicht lesbar. Die Kontrolle darüber, welche Zugriffsrechte für welche Personen bestehen, verbleibt beim Datenbanknutzer. Die Zuordnung zwischen den bearbeiteten Daten und den jeweiligen anonymisierten Daten, wie Kundennamen, bleibt erhalten. Nach Rückgabe der ausgewerteten oder bearbeiteten Datenbank an den Datenbanknutzer kann dieser die Deanonymisierung vornehmen und die vollständige, bearbeitete Datenbank nutzen.

Das erfindungsgemäße Verfahren läßt sich insbesondere auch dann vorteilhaft anwenden, wenn die sensiblen Datenfelder eine vorgegebene Feldlänge aufweisen. Es versteht sich aber von selbst, daß das Verfahren ohne Einschränkung auch bei unbegrenzten Feldlängen entsprechend anwendbar ist. Auch wenn sich die nachfolgenden Ausführungen vermehrt auf sensible Datenfelder vorgegebener Feldlänge beziehen, ist dies nicht einschränkend zu verstehen.

Vorteilhaft kann vor der Anonymisierung des sensiblen Datenfeldes eine Komprimierung der Daten vorgenommen werden. Im Falle der vollständigen Füllung des Datenfeldes wird auf diesem Wege Platz für die Hinzufügung von Start- und Stoppzeichen zur Kennzeichnung des anonymisierten Datenfeldes geschaffen. Die Kennzeichnung ist notwendig zur späteren Deanonymisierung des Datenfeldes.

Ist das Datenfeld ohnehin nicht vollständig gefüllt, oder sind die Daten durch die Komprimierung soweit komprimiert, daß noch Platz im Datenfeld verbleibt, kann das Datenfeld vor der Anonymisierung durch Füllzeichen aufgefüllt werden.

Es stehen insbesondere zwei Möglichkeiten zur Anonymisierung des Datenfeldes zur Verfügung, nämlich die Pseudonymisierung und die Verschlüsselung.

Ist das Datenfeld vollständig gefüllt, wird vorzugsweise eine Pseudonymisierung vorgenommen. Dabei muß die Länge des verwendeten Pseudonyms so gewählt werden, daß im Datenfeld nach der Pseudonymisierung Platz für Start- und Stoppzeichen verbleibt.

Verbleibt innerhalb des Datenfeldes noch Platz, so wird das Datenfeld vorzugsweise durch Füllzeichen, insbesondere mit zufälligen Werten, zumindest teilweise aufgefüllt und anschließend verschlüsselt.

Die Auffüllung des Feldes mit zufälligen Werten sichert die Auflösung von Isonomien. Beispielsweise ist es erforderlich, daß häufig auftretende Namen, wie im deutschen Sprachraum Müller, Meier usw. verschieden verschlüsselt werden, damit über eine Analyse der Häufigkeit der Daten keine Rückschlüsse auf die Daten gezogen werden kann. Dies wird mit der Auffüllung des Datenfeldes durch zufällige Werte und anschließende Verschlüsselung erreicht.

In einer bevorzugten Ausführungsform des erfindungsgemäßen Verfahrens werden im verschlüsselten Datenfeld auch Informationen über den zur Verschlüsselung verwendeten Schlüssel abgelegt. Diese Schlüsselinformationen dienen dem Datenbanknutzer dazu, die verschlüsselten Daten entschlüsseln zu können. Auf diesem Wege können verschiedene Schlüssel zur Verschlüsselung der Daten verwendet werden, wobei jeweils innerhalb des Feldes die entsprechenden Schlüsselinformationen zur Identifizierung des Schlüssels abgelegt werden. Es versteht sich von selbst, daß der Füllgrad des Feldes so beschaffen oder durch Datenkompression erzeugt werden muß, daß Platz zum Ablegen einer Schlüsselinformation verbleibt.

Das Erkennen, welche Daten zu ver- bzw. entschlüsseln sind, kann durch eindeutige Kennzeichnung durch sogenannte Start- und Stoppzeichen, wie z.B. "{" und "}" realisiert werden. Diese Start- und Stoppzeichen dürfen im betroffenen System außer zur Kennzeichnung verschlüsselter Daten nicht verwendet werden. Dieser Ansatz hat den Vorteil, daß er unabhängig von den Anwendungen, die auf den Daten operieren, ist.

Gibt es im betrachteten System kein einziges eindeutiges Startzeichen, kann eine Menge von Startzeichen verwendet werden. Gleiches gilt für das Stoppzeichen. Im einfachsten Fall könnte die Menge der Startzeichen aus einem Zeichen bestehen, welches mit dem Stoppzeichen identisch ist. Dies hat allerdings wiederum den Nachteil, daß eine Synchronisierung in einem Fehlerfall alleine aufgrund der Kenntnis von Start- und Stoppzeichen nicht mehr möglich ist.

Das erfindungsgemäße Verfahren wird im folgenden anhand von verschiedenen Beispielen mit Bezug auf die beigefügten Abbildungen näher erläutert:

**Fig. 1** zeigt die Kennzeichnung von sensiblen, zu anonymisierenden Daten;

**Fig. 2** zeigt das Ablaufschema einer Ver- bzw. Entschlüsselung;

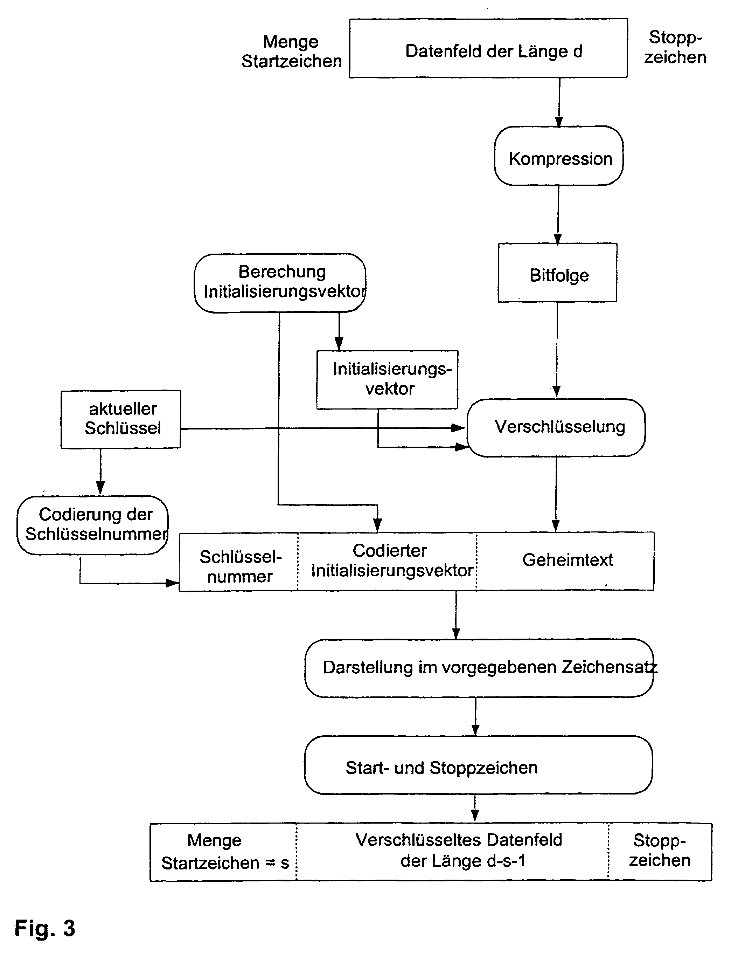

**Fig. 3** zeigt den Ablauf eines Verschlüsselungsprozesses;

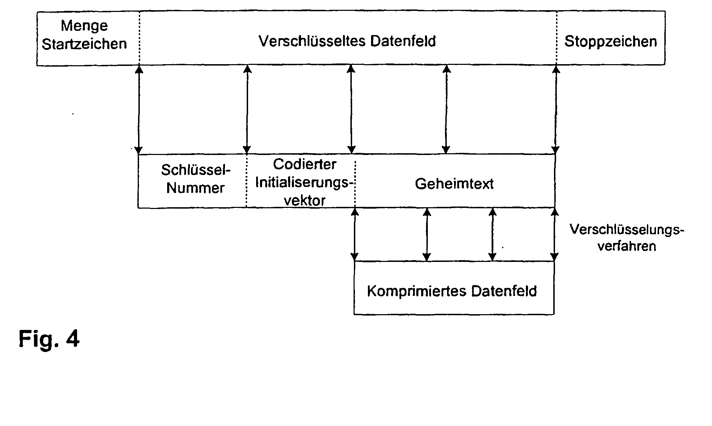

**Fig. 4** zeigt die Struktur eines verschlüsselten Datenfeldes;

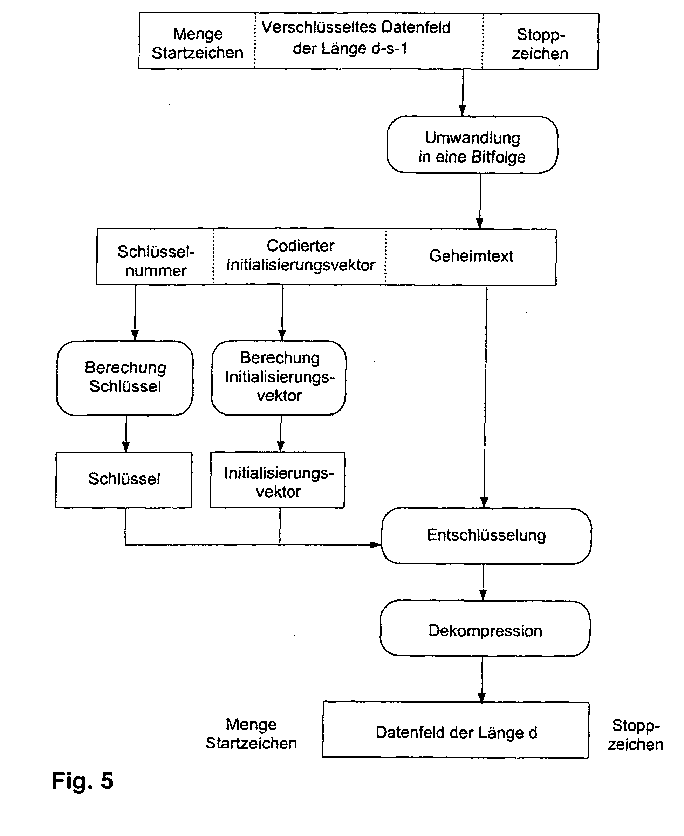

**Fig. 5** zeigt den Ablauf eines Entschlüsselungsprozesses.

Das Anonymisierungsverfahren soll folgende Anforderungen erfüllen:

1. Häufig vorkommende Daten (z.B. die häufig auftretenden Namen Müller, Meier usw. im deutschen Sprachraum) sollen verschieden verschlüsselt werden. Dadurch soll verhindert werden, daß über die Analyse der Häufigkeit von Daten Schlüsse auf die Daten selbst gezogen werden können. Die Isonomien der Daten sollen aufgelöst werden.

2. Die Länge eines zu verschlüsselndes Datenfelds ist durch eine fixe, maximale Länge beschränkt, die im wesentlichen durch das Datenbank-Design vorgegeben ist. Feldtypen, z.B. numerisch oder alphanumerisch dürfen nicht verändert werden. Diese Anforderung ermöglicht eine nachträgliche Integration des Verfahrens, ohne daß ein Betreiber eines Datenbanksystems seine Anwendungen zur Verarbeitung der Daten verändern muß.

3. Jedes verschlüsselte Datenfeld enthält alle Informationen außer Schlüssel und systemweite Parameter zur Entschlüsselung. Ein autarkes Verarbeiten jedes Datenfeldes ist deshalb möglich.

Die vorgenannten drei Eigenschaften sollen von dem gewählten Anonymisierungsverfahren gleichzeitig erfüllt werden.

Zur Durchführung des Verfahrens wird das zu anonymisierende Datenfeld zunächst auf seinen Füllgrad hin überprüft. Es muß sichergestellt werden, daß nach der Verschlüsselung noch genügend Platz innerhalb der vorgegebenen festen Datenfeldlänge verbleibt, um ein Start- sowie ein Stoppzeichen und eine Information für den verwendeten Schlüssel abzulegen.

Ist der Füllgrad des Datenfeldes zu groß um eine Verschlüsselung mit den vorgenannten Kriterien durchführen zu können, wird das Datenfeld zunächst komprimiert. Führt auch die Komprimierung des Datenfeldes nicht zu einer hinreichend kleinen Feldgröße, erfolgt die Pseudonymisierung. Das Pseudonym muß so gewählt werden, daß die oben unter 2.) vorgegebene Bedingung hinsichtlich des Füllungsgrades des Datenfeldes erfüllt wird.

Ist der Füllgrad des Datenfeldes hinreichend gering, um eine Verschlüsselung des Datenfeldes zu ermöglichen, wird die Verschlüsselung vorgenommen. Dafür wird das Datenfeld zunächst bis zum maximal möglichen Füllgrad mit zufälligen Werten aufgefüllt.

Bei geringem Informationsgehalt des Datenfelds kann vor der Auffüllung eine Datenkomprimierung vorgenommen werden, um Isonomien besser auflösen zu können.

Anschließend wird die Verschlüsselung vorgenommen. Der verwendete Verschlüsselungsalgorithmus kann beliebig gewählt werden. Gängige Algorithmen sind z.B. IDEA (International Data Encryption Algorithm) oder DES (Data Encryption Standard).

Das verschlüsselte Datenfeld wird dann mit einem Start- und einem Stoppzeichen gekennzeichnet. Außerdem wird im Datenfeld an einer vorher definierten Position eine Information über den zur Verschlüsselung verwendeten Schlüssel abgelegt.

Das nachfolgende Beispiel soll das Verfahren veranschaulichen:

Die Datenfeldlänge beträgt 40 Zeichen. Inhalt des unverschlüsselten Datenfeldes ist der Name "Meier". Als Startzeichen dient "{", als Stoppzeichen "}". Das Datenfeld wird auf die volle Feldlänge aufgefüllt und mit Start- und Stoppzeichen versehen, also:

{Meier...................}.

An das Verfahren werden die 40 Zeichen zwischen den Start- und Stoppzeichen übergeben. Die Verschlüsselung ergibt dann ein 40 Zeichen langes Datenfeld einschließlich Start- und Stoppzeichen, also z.B.:

{ch74nHhdjqa.....................yjas8}.

In den verschlüsselten Datenfeldern sind k Bits zur Kennzeichnung des verwendeten Schlüssels aus einem Schlüsselsatz vorgesehen. Somit ist es möglich, $2^k$ verschiedene Schlüssel darzustellen. Durch die Aufnahme von Zusatzinformationen in die verschlüsselten Datenfelder, wie z.B. Menge von Start- und von Stoppzeichen, Schlüsselbits und Informationen über den verwendeten Initialisierungssektor für den Verschlüsselungsalgorithmus ist eine Komprimierung der zu verschlüsselnden Datenfelder notwendig.

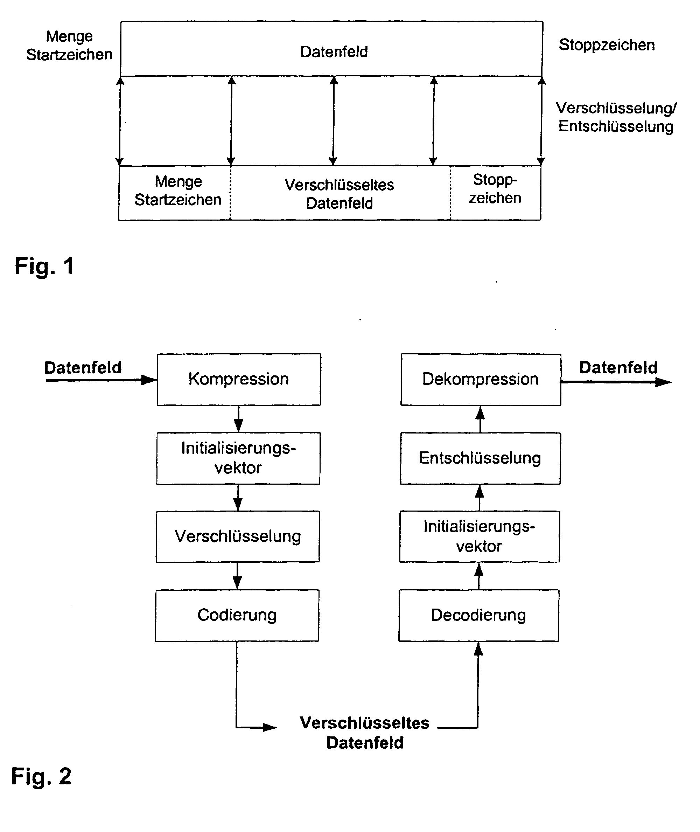

In der beigefügten **Fig. 2** ist die Ver- bzw. Entschlüsselung von Datenfeldern dargestellt. Die einzelnen Schritte werden nachfolgend näher erläutert.

Die Beschreibung des Verfahrens geht von den folgenden Voraussetzungen aus:

- Jedes Zeichen wird durch ein Byte dargestellt (z.B. ASCII- oder EBCDIC-Code). Vor der Ver- bzw. Entschlüsselung werden alle Zeichen eines Feldes in einen internen Zeichensatz (ASCII) umgewandelt und danach wieder entsprechend konvertiert.

- Die unterschiedlichen Parameter sind wie folgt festgelegt:

1. einen Zeichensatz (z.B. 91 bestimmte Zeichen des EBCDIC-Codes);

2. eine Menge der Startzeichen und Stoppzeichen für verschlüsselte Datenfelder, die nicht im Zeichensatz enthalten sind;

3. ein Ersatzzeichen für nicht zum Zeichensatz gehörende Zeichen (ist Bestandteil des Zeichensatzes);

4. ggf. notwendige Füllzeichen (ist Bestandteil des Zeichensatzes);

5. Verfahrensparameter für die Kompression;

6. Angaben darüber, wie bei nicht erfolgreicher Komprimierung das ursprüngliche Datenfeld nachverarbeitet werden soll;

7. Angaben zur Darstellung von Bitfolgen als Folgen zulässiger Zeichen;

8. Angaben darüber, welcher der Schlüssel aus dem Schlüsselsatz verwendet werden soll.

In Abhängigkeit von der Mächtigkeit des Zeichensatzes lassen sich einzelne Bitsegmente jeweils zu Zeichenfolgen einer bestimmten Länge umformen (zum Beispiel können bei einem Zeichensatz von 91 Zeichen je 13 Bit in je 2 Zeichen effektiv umgeformt werden). Optimal wäre eine "gemeinsame" Umformung der gesamten Bitfolge durch Betrachtung der Folge als Binärzahl und Darstellung dieser Zahl zur Basis $b$ = Mächtigkeit des Zeichensatzes.

Im folgenden wird ein Verfahren zur effektiven Codierung einer möglichst großen Bitfolge in ein Datenfeld einer vorgegebenen Länge beschrieben, das für eine Implementierung auf Systemen mit 32-Bit-Prozessoren vorgesehen ist. Zunächst wird für einen gegebenen Zeichensatz vom Umfang $b$ vor der Grundinitialisierung einmalig folgendes berechnet ("ln" bezeichnet hierbei den natürlichen Logarithmus):

- Bestimmung des Minimalwertes von $x/y$ für ganzzahliges $y$ von 1 bis 32 und ganzzahliges $x \geq y$ * ln(2)/ln(b). Beispiel: Bei $b$ = 91 erhält man ein Minimum bei $x$ = 2 und $y$ = 13.
- Für alle Werte $x'$ von 1 bis $x$-1 wird das jeweilige ganzzahlige Maximum $y'(x')$ mit $y'(x)$ * ln(2)/ln($b$) $\leq x'$ berechnet. Außerdem wird $y'(0) := 0$ gesetzt. Beispiel: Bei $b$ = 91 und $x$ = 2 erhält man $y'(1)$ = 6.

Es läßt sich nun folgendermaßen eine Bitfolge in ein Datenfeld der Länge d umformen:

1. Umformung von je $y$ Bit in je $x$ Zeichen.
Beispiel: Bei $b$ = 91 werden je 13 Bit durch je 2 Zeichen dargestellt.

2. Falls die gegebene Datenfeldlänge $d$ nicht durch $x$ teilbar ist, dann werden $y'(x')$ Bit in die restlichen $x'$ Zeichen umgeformt. Im Beispiel werden noch 6 Bit durch ein Zeichen dargestellt.

Sei s die Anzahl der verwendeten Startzeichen in den verschlüsselten Datenfeldem und

$$L(d,b,s) = L = ((d - s - 1) \text{ DIV } x) {}^* y + y'((d - s - 1) \text{ MOD } x)$$

die Anzahl der Bits, die sich durch Anwendung des obigen Verfahrens in ein Datenfeld der Länge ($d$ - $s$ - 1 ) umformen lassen. Der Wert ($d$ - $s$ - 1) resultiert daraus, daß im verschlüsselten Datenfeld die Menge der Startzeichen der Länge $s$ und das Stoppzeichen enthalten sein müssen.

Bei $d$ = 30, $b$ = 91 und $s$ =1 erhält man zum Beispiel $L$ = 14 * 13 + 0 =182, bei $d$ = 15, $b$ = 91 und $s$ = 3 ergibt sich $L$ = 5 * 13 + $y'(1)$ = 65 + 6 = 71.

m = ($L$ - k - Länge komprimierte Bitfolge) sei, die nach der Kompression noch zur Verfügung stehenden Bits, k Bits sind für die Nummer des verwendeten Schlüssels vorgesehen. Für die Kompression können die verschiedensten Methoden eingesetzt werden. In Abhängigkeit von dieser Zahl m wird festgelegt, wie der Initialisierungsvektor für die Verschlüsselung bereitgestellt und codiert wird.

Die geeignete Wahl des Initialisierungsvektors sorgt dafür, daß Isonomien aufgelöst werden. Es gibt hierfür prinzipiell die folgenden Möglichkeiten, die eingesetzt werden können:

- Verwendung von Zufallszahlen

- Verwendung von Zählern.

Zeitlich gestaffelt können verschiedene Schlüssel des aus k Schlüsseln bestehenden Schlüsselsatzes eingesetzt werden. Bei der Verschlüsselung ist festzulegen, welcher dieser Schlüssel verwendet werden soll. Die Schlüsselnummer wird durch k Bits kodiert.

Wenn die aus k Bits für die Nummer des Schlüssels, den Bits für die Codierung des Initialisierungsvektors und den Bits des komprimierten Datenfeldes bestehende Bitfolge kürzer als erforderlich sein sollte, d.h. kleiner als $L$ ist, so wird sie am Ende mit Bits "0" aufgefüllt, bis die maximal zulässige Bitlänge $L$ erreicht ist.

Verschlüsselt wird der komprimierte Datenfeldinhalt.

Die Verschlüsselung kann mit einem Blockverschlüsselungsalgorithmus erfolgen und dem gespeicherten geheimen Schlüssel im CBC-Modus, wobei der letzte Block der Länge $j$ (falls diese kürzer als 64 Bit ist) im CFB-Modus verschlüsselt wird (siehe z.B.ISO/IEC 10116, Informations Technologie - Modes of Operation for ann-bit Block Cipher Algorithm, 1991).

Bei der Betrachtung wird davon ausgegangen, daß die typische Blocklänge von 64 verwendet wird. Eine Verallgemeinerung auf andere Blocklängen ist offensichtlich. Eine andere Variante, die sog. Stromverschlüsselungsalgorithmen, könnten direkt zur zeichenweisen Verschlüsselung eingesetzt werden.

Zur Bildung des verschlüsselten Datenfeldes wird schließlich die erhaltene Zeichenfolge zwischen der Menge Startzeichen und dem Stoppzeichen eingefügt.

Sobald im Datenstrom die Startzeichenfolge erkannt wird, werden die nachfolgenden Zeichen in einen internen Speicher gegeben, bis das Stoppzeichen erscheint.

Falls sich unter den nachfolgenden Zeichen die Startzeichenfolge befindet, wird der Prozeß der Einspeicherung abgebrochen und bei der neuen Startzeichenfolge begonnen. Falls nach einer vorgegebenen Maximallänge noch kein Stoppzeichen festgestellt wurde, wird der Prozeß ebenfalls abgebrochen und es wird erneut nach der nächsten Startzeichenfolge gesucht. Falls zwischen der Menge Startzeichen und dem Stoppzeichen weniger als eine vordefinierte untere Schranke Zeichen sind, wird die Einspeicherung ebenfalls abgebrochen.

Nicht jedes Datenfeld kann so stark komprimiert werden, daß die angestrebte Anzahl Bits für den Initialisierungsvektor zur Verfügung steht. Je kürzer die Datensatzlänge ist, desto schlechter ist die Komprimierung, mit der Konsequenz, daß weniger Bits für den Initialisierungsvektor zur Verfügung stehen und somit weniger Möglichkeiten verschiedene Chiffrate für ein Datenfeld zu erzeugen.

In einem solchen Fall gibt es prinzipiell die folgenden drei Möglichkeiten fortzufahren:

1. Kürzung des Datenfeldes bis eine ausreichende Komprimierung erreicht werden kann. Dies ist aber zwangsläufig mit Informationsverlust verbunden.

2. Das betroffene Datenfeldes wird nicht verschlüsselt, es wird somit in Klartext bleiben. Dies kann möglicherweise akzeptabel sein, falls dies im Verhältnis zu der gesamten Menge zu verschlüsselten Datenfelder sehr selten vorkommt.

3. Verwendung des Pseudonymisierungsansatzes, dieser wird im folgenden beschrieben.

Bei vorgegebener fester Feldlänge, kann der Fall eintreten, daß keine ausreichende Komprimierung der Datensätze erreicht werden kann. Ist eine Kürzung oder das Weiterleiten in Klartext nicht akzeptabel, so kann die vollständige "Verschleierung" aller ausgewählten Datensätze, durch den Pseudonymisierungsansatz realisiert werden.

Analog zu einem Alias, erfolgt eine Verknüpfung von Datenfeldem und Pseudonymen und vice versa. Die Informationen werden in einer Tabelle gehalten.

Leutheusser-Schnarrenberger    <->    X1BXE.....H

Garmisch-Partenkirchen    <->    X2BXD9.....Z

Falls die Pseudonymisierung an mehreren räumlich getrennten Orten notwendig ist, müssen die an allen Standorten vergebenen Pseudonyme an allen anderen Standorten vorgehalten werden (Replikation). Dies bedeutet zusätzliche Kommunikationskosten. Es sind zusätzliche Maßnahmen zur Sicherung der Übertragung notwendig.

Die Speicherung von verschlüsselten Datenfeldem kann über längere Zeiträume, z.B. 5 - 15 Jahre, erfolgen. Die zeitlich gestaffelte Verwendung von mehr als einem Schlüssel ist aus den folgenden Gründen ratsam:

• Wird der Schlüssel bekannt, ist die gesamte Menge der verschlüsselten Datenfelder als offen gelegt zu betrachten.

• Die einem Krypto-Analysten zur Verfügung stehende Menge von verschlüsselten Datenfeldem, ist wesentlich geringer, wenn mehrere Schlüssel verwendet werden.

Deshalb sieht das Verfahren pro Menge von Datenbanknutzern, die kooperieren, k Schlüssel vor.

in einem Trust Center (vertrauenswürdige dritte Instanz), welches das notwendige technische und organisatorische Umfeld stellt, können die Schlüssel generiert werden.

Verschiedene Mengen von Datenbanknutzern, die nicht miteinander kooperieren, sollten verschiedene Mengen von Schlüsseln haben, die keinerlei Abhängigkeit von einander haben. So ist ausgeschlossen, daß eine Menge von Datenbanknutzern auf Datenbankinformationen der anderen Menge von Datenbanknutzern zugreifen kann.

Das Key Management besteht aus folgenden Funktionen:

1. Schlüsselerzeugung
   Erzeugung eines Schlüsselpaktets aus k Schlüsseln. Hierfür eignet sich besonders ein Hardware Zufallszahlengenerator.. Im Nachgang der Schlüsselerzeugung können die generierten Schlüssel auf ein Schlüsselaufbewahrungsmedium, z.B. eine Chip- oder PCMCIA-Karte, gespeichert werden. Diese Medien können so konfiguriert werden, daß sie die kryptographischen Berechnungen selbst ausführen oder Schlüssel erst nach vorheriger Authentisierung herausgeben.

2. Schlüsselverteilung
   Vom Ort der Schlüsselgenerierung können die Schlüssel auf einem Schlüsselaufbewahrungsmedium zum Einsatzort (Endgerät) oder zur sicheren Aufbewahrung (Back-up) transportiert werden.

3. Schlüssel in Endgeräte einbringen
   Ein Endgerät zeichnet sich dadurch aus, daß es die notwendigen Ver- bzw. Entschlüsselungsprozesse ausführen kann. Ein solches Gerät kann eine speziell entwickelte Hardware oder ein PC sein. Die Schlüssel können aus dem Schlüsselaufbewahrungsmedium nach vorheriger Authentisierung in ein Endgerät geladen werden oder das Endgerät kann Aufträge zur Ver- und Entschlüsselung entgegennehmen. Der letzte Fall setzt eine entsprechende Ressource des Schlüsselaufbewahrungsmediums voraus, hat aber der Vorteil, daß die Schlüssel nie das Schlüsselaufbewahrungsmedium verlassen.

4. Schlüssel vernichten:
   Falls ein kooperierende Menge von Datenbanknutzern ein Schlüsselpaket aus k Schlüsseln nicht mehr benötigt, ist es möglich, die Schlüssel durch geeignete Maßnahmen zu vernichten. z.B. durch Vernichtung des Schlüsselaufbewahrungsmediums und Löschen des Schlüsselpakets aus den entsprechenden Endgeräten, falls vorhanden.

**Patentansprüche**

1. Verfahren zur Anonymisierung sensibler Daten innerhalb eines Datenstroms mit den folgenden Schritten:

   a) Komprimierung des sensiblen Datenfeldes
   b) Anonymisierung des sensiblen Datenfeldes.
   c) Kennzeichnung des anonymisierten sensiblen Datenfeldes innerhalb des Datenstroms durch Start- und Stoppzeichen.

2. Verfahren nach Anspruch 1, **dadurch gekennzeichnet, daß** das sensible Datenfeld vor der Anonymisierung durch Füllzeichen aufgefüllt wird.

3. Verfahren nach Anspruch 1 oder 2, **dadurch gekennzeichnet, daß** die zu anonymisierenden Daten pseudonymisiert werden.

4. Verfahren nach Anspruch 1 oder 2, **dadurch gekennzeichnet, daß** die zu anonymisierenden Daten verschlüsselt werden.

5. Verfahren nach Anspruch 4, **dadurch gekennzeichnet, daß** sensible Datenfelder vor der Verschlüsselung zumindest teilweise mit zufälligen Werten aufgefüllt werden.

6. Verfahren nach Anspruch 4 oder 5, **dadurch gekennzeichnet, daß** im verschlüsselten Datenfeld Informationen über den zur Verschlüsselung verwendeten Schlüssel abgelegt werden.

7. Verfahren nach einem der Ansprüche 1 bis 6, **dadurch gekennzeichnet, daß** das sensible Datenfeld eine feste Feldlänge aufweist.

**Claims**

1. Method for anonymizing sensitive data within a data stream having the following steps:

   a) the sensitive data field is compressed,
   b) the sensitive data field is anonymized,
   c) the anonymized sensitive data field is identified within the data stream by means of start and stop characters.

2. Method according to Claim 1, **characterized in that** the sensitive data field is filled in with fuller characters before the anonymization.

3. Method according to Claim 1 or 2, **characterized in that** the data which is to be anonymized is pseudonymized.

4. Method according to Claim 1 or 2, **characterized in that** the data which is to be anonymized is encrypted.

5. Method according to Claim 4, **characterized in that** sensitive data fields are at least partially filled in with random values before the encryption.

6. Method according to Claim 4 or 5, **characterized in that** information about the key which is used for encryption is stored in the encrypted data field.

7. Method according to one of Claims 1 to 6, **characterized in that** the sensitive data field has a fixed field length.

**Revendications**

1. Procédé pour rendre anonymes des données sensibles au sein d'un flux de données comprenant les étapes suivantes :

   a) Compression du champ de données sensible
   b) Anonymisation du champ de données sensible
   c) Identification du champ de données sensible rendues anonymes au sein du flux de données par des caractères de début et de fin.

2. Procédé selon la revendication 1, **caractérisé en ce que** le champ de données sensibles est rempli de caractères de remplissage avant l'anonymisation.

3. Procédé selon la revendication 1 ou 2, **caractérisé en ce que** les données à rendre anonymes sont identifiées par un pseudonyme.

4. Procédé selon la revendication 1 ou 2, **caractérisé en ce que** les données à rendre anonymes sont cryptées.

5. Procédé selon la revendication 4, **caractérisé en ce que** les champs de données sensibles sont au moins partiellement remplis de valeurs aléatoires avant le cryptage.

6. Procédé selon la revendication 4 ou 5, **caractérisé en ce que** dans le champ de données crypté sont enregistrées des informations sur le code utilisé pour le cryptage.

7. Procédé selon l'une des revendications 1 à 6, **caractérisé en ce que** le champ de données sensible présente une longueur de champ fixe.

| Menge<br>Startzeichen | Datenfeld | | | Stoppzeichen |
| --- | --- | --- | --- | --- |
| | | | | Verschlüsselung/<br>Entschlüsselung |
| Menge<br>Startzeichen | Verschlüsseltes<br>Datenfeld | | | Stopp-<br>zeichen |

## Fig. 1

**Datenfeld** →

| Kompression |
| --- |

↓

| Initialisierungs-<br>vektor |
| --- |

↓

| Verschlüsselung |
| --- |

↓

| Codierung |
| --- |

| Dekompression | → **Datenfeld**
| --- |

↑

| Entschlüsselung |
| --- |

↑

| Initialisierungs-<br>vektor |
| --- |

↑

| Decodierung |
| --- |

**Verschlüsseltes
Datenfeld**

## Fig. 2

Menge
Startzeichen

Datenfeld der Länge d

Stoppzeichen

Kompression

Bitfolge

Berechung
Initialisierungsvektor

Initialisierungsvektor

aktueller
Schlüssel

Verschlüsselung

Codierung der
Schlüsselnummer

| Schlüssel-nummer | Codierter Initialisierungsvektor | Geheimtext |
|---|---|---|

Darstellung im vorgegebenen Zeichensatz

Start- und Stoppzeichen

| Menge Startzeichen = s | Verschlüsseltes Datenfeld der Länge d-s-1 | Stopp-zeichen |
|---|---|---|

## Fig. 3

| Menge Startzeichen | Verschlüsseltes Datenfeld | Stoppzeichen |
|---|---|---|

| Schlüssel-Nummer | Codierter Initialiserungs-vektor | Geheimtext |
|---|---|---|

Verschlüsselungs-verfahren

| Komprimiertes Datenfeld |
|---|

**Fig. 4**

| Menge<br>Startzeichen | Verschlüsseltes Datenfeld<br>der Länge d-s-1 | Stopp-<br>zeichen |
|---|---|---|

```
        ┌─────────────────────┐
        │     Umwandlung       │
        │   in eine Bitfolge   │
        └─────────────────────┘
```

| Schlüssel-<br>nummer | Codierter<br>Initialisierungsvektor | Geheimtext |
|---|---|---|

```
┌──────────────┐   ┌──────────────┐
│  Berechung   │   │  Berechung   │
│  Schlüssel   │   │Initialisierungs-│
│              │   │    vektor    │
└──────────────┘   └──────────────┘

┌──────────────┐   ┌──────────────┐
│  Schlüssel   │   │Initialisierungs-│
│              │   │    vektor    │
└──────────────┘   └──────────────┘
```

```
        ┌─────────────────────┐
        │    Entschlüsselung   │
        └─────────────────────┘

        ┌─────────────────────┐
        │    Dekompression     │
        └─────────────────────┘
```

Menge<br>Startzeichen · Datenfeld der Länge d · Stopp-<br>zeichen

## Fig. 5